(19)

Europäisches
Patentamt
European
Patent Office
Office européen
des brevets

(11) **EP 2 351 822 A1**

(12) **EUROPEAN PATENT APPLICATION**
published in accordance with Art. 153(4) EPC

(43) Date of publication:
03.08.2011 Bulletin 2011/31

(21) Application number: 09823559.1

(22) Date of filing: 27.10.2009

(51) Int Cl.:
*C11B 3/06* (2006.01)  *A23D 9/02* (2006.01)
*C11B 1/06* (2006.01)  *C11B 1/16* (2006.01)
*C11B 7/00* (2006.01)  *C11B 11/00* (2006.01)

(86) International application number:
**PCT/JP2009/068363**

(87) International publication number:
**WO 2010/050449 (06.05.2010 Gazette 2010/18)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: 28.10.2008 JP 2008277508

(71) Applicant: **The Nisshin OilliO Group, Ltd.
Tokyo 104-8285 (JP)**

(72) Inventors:
• **MAKI, Hideaki
Yokosuka-shi
Kanagawa 239-0832 (JP)**
• **TOKUNAGA, Kunihiko
Tokyo 104-8285 (JP)**
• **TSUYUKI, Yasutaka
Yokohama-shi
Kanagawa 235-8558 (JP)**

• **HIYAMA, Takuya
Yokohama-shi
Kanagawa 235-8558 (JP)**
• **SAIDA, Toshinori
Yokohama-shi
Kanagawa 235-8558 (JP)**
• **ITOU, Jun
Yokohama-shi
Kanagawa 235-8558 (JP)**
• **KOMORI, Ryouhei
Yokohama-shi
Kanagawa 235-8558 (JP)**

(74) Representative: **Denison, Christopher Marcus et al
Mewburn Ellis LLP
33 Gutter Lane
London
EC2V 8AS (GB)**

(54) **PALM OIL, DEODORIZED DISTILLATES AND MANUFACTURING METHODS THEREFOR**

(57) Provided are palm oil of superior chromaticity and flavor and a manufacturing method therefor with which palm oil can be obtained with good yield even if a chemical refining method of alkaline deacidification is performed. Also provided are a palm oil manufacturing method with which deodorized distillates wherein useful components have been highly concentrated can be obtained, said deodorized distillates and a manufacturing method therefor. Refined palm oil and deodorized distillates as by-product are manufactured with a manufacturing process flow comprising a process wherein the palm starting material is steamed within **24** hours of harvesting and then pressed to obtain crude palm oil, a subsequent refining process wherein the crude palm oil undergoes alkaline deacidification to obtain the alkaline deacidified palm oil, and a deodorizing process.

FIG. 1

```
Palm fruit
bunch
   |←— Steaming (within 24 hours of harvesting)
   |←— Fruit removal
   |
Empty bunch     Palm fruits
                   |←— Pressing
Pressed cake    Pressed oil
fibers             |←— Gravity separation/centrifugation
                Crude palm oil
                   |←— Degumming
                   |←— Alkaline deacidification
                   |←— Bleaching
                   |←— Deodorization
Deodorized  ←———
distillates
                Refined
                palm oil
                   |←— Fractionation
         Fractionated refined palm oil
```

**EP 2 351 822 A1**

Description

TECHNICAL FIELD

The present invention relates to palm oil, deodorized distillates and manufacturing methods therefor, in particular, relates to providing palm oil of having superior chromaticity and flavor and its manufacturing method for palm oil with which palm oil can be obtained with good yield by chemical refining method with alkaline deacidification is performed. In addition, the present invention relates to providing deodorized distillates wherein useful components have been highly concentrated and a manufacturing method therefor.

BACKGROUND ART

Conventionally, manufacturing of palm oil has been carried out, for example, in accordance with a manufacturing process flow shown in FIG.2 (for example, refer to nonpatent literature 1 and patent literature 1).

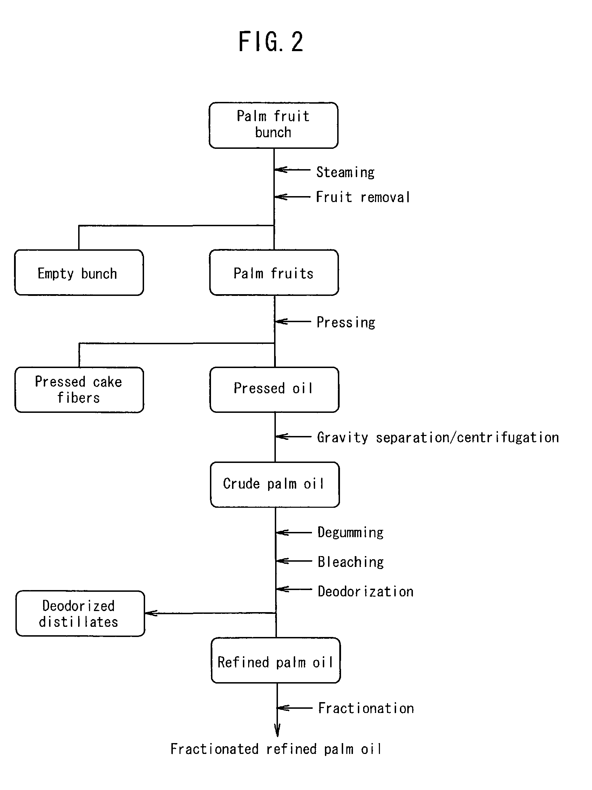

The manufacturing process flow shown in FIG.2 includes a pressing process of palm fruit bunch as a raw material to obtain pressed palm oil and further crude palm oil, and a refining process of the crude palm oil to refined palm oil.

In the process of obtaining the crude palm oil, first, palm fruit bunch as a starting material undergoes steam sterilization (steaming) for the purpose of inactivating lipase and microorganism, and then subjecting to fruit removal for separating into empty bunch and palm fruits due to steaming, and the separated palm fruits undergo pressing. After this, the separated palm fruits are separated into pressed palm oil and pressed cake fibers so as to obtain pressed palm oil. Furthermore, the pressed cake fibers are used for obtaining palm kernel oil by separating palm kernels from the cake fibers.

The pressed palm oil is subjected to the clarification process by gravity separation and centrifugation so as to obtain the crude palm oil.

In a subsequent process to obtain refined palm oil, the crude palm oil obtained by the above-mentioned process is refined. Refining is broadly classified into a physical refining method and a chemical refining method.

In the physical refining method, for example, as shown in FIG.2, the crude palm oil obtained undergoes degumming due to acid, bleaching due to absorbent such as clay/activated carbon and the like, and deacidifying and deodorizing due to reduced pressure steam distillation so that refined palm oil is produced. Since a physical refining method has an advantage of a better yield, it has been widely used in palm oil refining.

On the other hand, in the chemical refining method, for example, the crude palm oil obtained undergoes degumming due to acid, deacidifying due to alkali, water washing for removing out the surplus of alkali and soap after the deacidifying, bleaching due to absorbent such as clay/activated carbon and the like, and deodorizing by reduced pressure steam distillation so that refined palm oil is produced. However, in the case of the chemical refining method, although it shows better refining effect, the yield of refined palm oil is not good, so that in recent years, it has not been carried out as a palm oil refining method.

Although the physical refining method as described above is presently used, there is a need to increase the amount of clay in bleaching in order to reduce the chromaticity of refined oil.

The refined palm oil can be used for obtaining fractionated palm oil (Single-fractionated or not less than double-fractionated)such as palm olein, palm super olein, palm mid-fraction, palm stearin and the like.

In addition, it is known that the deodorized distillates obtained as a by-product in the deodorization in the refining process is composed of free fatty acids. In addition, it contains useful components such as squalenes, tocopherols, tocotrienols and the like, so that they are used as starting materials for the useful ingredients (for example, refer to Patent Literature 2). These useful ingredients are used for medical products, food products, cosmetic products and the like as antioxidant agent, nutrient component and the like.

PRIOR ART DOCUMENTS

NONPATENT LITERATURE

Nonpatent Literature 1: Bailey's Industrial Oil and Fat Products, Fifth Edition, Volume 2, A Wiley-Interscience Publication JOHN WILEY & SONS, INC., page 288 to 331, 1996.

PATENT LITERATURE

   Patent Literature 1: JP2006-A-316254 (paragraph 3)
   Patent Literature 2: JP1990(H02)-A-9875

## SUMMARY OF THE INVENTION

### PROBLEMS TO BE SOLVED BY THE INVENTION

As described above, for the palm oil refining method, the physical refining method which has an advantage in terms of yield has been commonly used. However, a manufacturing method for palm oil is needed, in which palm oil can be obtained with good yield and a better refining effect as in the chemical refining method.

In addition, palm oil is needed, that has superior chromaticity and flavor without increasing amount of clay.

In addition, as described in Patent Literature 2, concentrations of useful components such as tocopherols, tocotrienols and the like contained in the deodorized distillates and the like are extremely low, so that a complex concentration process is needed. Consequently, a manufacturing method for palm oil is needed, with which deodorized distillates in which useful components are more highly concentrated can be obtained.

Therefore, it is an object of the present invention to provide palm oil of superior chromaticity and flavor and a manufacturing method for palm oil with which palm oil can be obtained with good yield even if a chemical refining method of alkaline deacidification is performed. Furthermore, it is another object of the present invention to provide a manufacturing method for palm oil with which deodorized distillates in which useful components are highly concentrated can be obtained, the deodorized distillates and a manufacturing method therefor.

### MEANS FOR SOLVING THE PROBLEMS

In order to achieve the above-mentioned object, the present invention provides a manufacturing method for palm oil comprising a process wherein a palm starting material is steamed within **24** hours of harvesting and then pressed to obtain crude palm oil; and a subsequent refining process wherein the crude palm oil undergoes alkaline deacidification to obtain alkaline deacidified palm oil. In addition, the present invention provides a manufacturing method for palm oil wherein during the refining process, the alkaline deacidified palm oil undergoes bleaching and then undergoes deodorization.

In addition, in order to achieve the above-mentioned object, the present invention provides refined palm oil according to the claimed manufacturing method for palm oil.

In addition, in order to achieve the above-mentioned object, the present invention provides a manufacturing method to obtain the deodorized distillates through the deodorization in the manufacturing method for palm oil.

In addition, in order to achieve the above-mentioned object, the present invention provides deodorized distillates obtained by the deodorization in the manufacturing method for palm oil.

### ADVANTAGES OF THE INVENTION

According to the present invention, palm oil of superior chromaticity and flavor and a manufacturing method for palm oil with which palm oil can be obtained with good yield even if a chemical refining method of alkaline deacidification is performed can be provided. Furthermore, a manufacturing method for palm oil with which deodorized distillates in which useful components are highly concentrated can be obtained, the deodorized distillates and a manufacturing method therefor can be provided.

### BRIEF DESCRIPTION OF THE DRAWINGS

FIG.1 is a flowchart schematically showing an example of a manufacturing process flow of refined palm oil according to an embodiment of the present invention; and

FIG.2 is a flowchart schematically showing an example of a conventional manufacturing process flow of refined palm oil.

### EMBODIMENT FOR CARRYING OUT THE INVENTION

[Manufacturing method for palm oil according to an embodiment of the present invention]

The manufacturing method for palm oil according to an embodiment of the present invention includes a process wherein a palm starting material is steamed within **24** hours of harvesting and then pressed to obtain crude palm oil and a subsequent refining process wherein the crude palm oil undergoes alkaline deacidification to obtain alkaline deacidified palm oil.

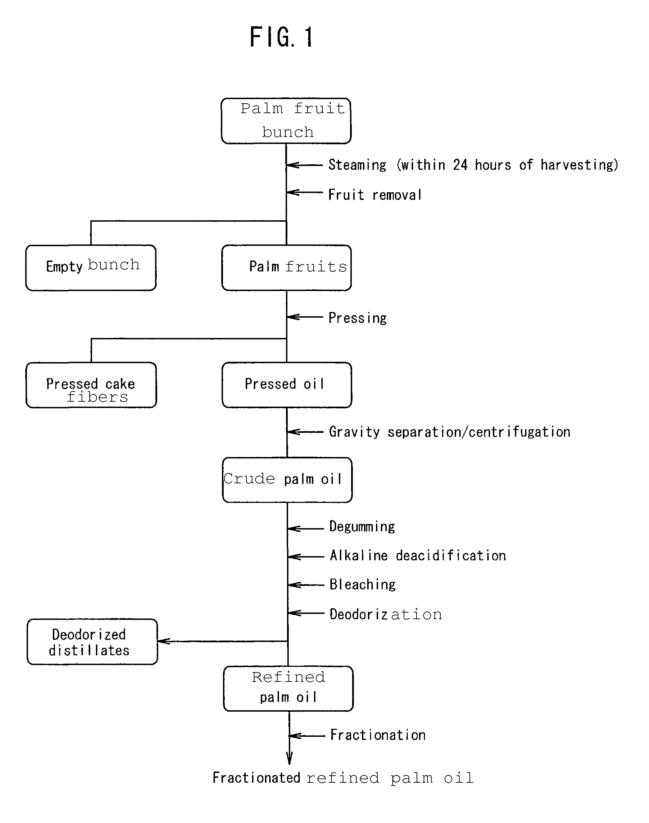

FIG.**1** is a flowchart schematically showing an example of a manufacturing process flow of refined palm oil according to an embodiment of the present invention. **FIG.1** is different from FIG.**2** being a flowchart schematically showing an example of a conventional manufacturing process flow of palm oil in that a palm starting material is steamed within **24** hours of harvesting so as to obtain crude palm oil, and a chemical refining method is carried out, the chemical refining method including a process in which the crude palm oil obtained as a result undergoes alkaline deacidification to obtain alkaline deacidified palm oil.

(Process for obtaining crude palm oil)

In the process for obtaining crude palm oil, first, palm fruit bunch being a palm starting material undergoes steam sterilization (steaming) for the purpose of inactivating lipase and microorganism, and then subjecting to fruit removal for separating into empty bunch and palm fruits due to steaming, and the separated palm fruits undergo pressing.
The palm starting material is steamed within **24** hours of harvesting, so that crude palm oil having a high quality can be obtained. The steaming is carried out preferably within **20** hours of harvesting, more preferably within **12** hours of harvesting, and further more preferably within **6** hours of harvesting.
A method of steam enzyme deactivation (steaming) can be carried out by a method that has been carried out conventionally.
Due to the pressing, the separated palm fruits are separated into pressed palm oil and pressed cake fibers, and the pressed palm oil obtained is subjected to gravity separation and centrifugation so as to remove sediments and obtain the crude palm oil. The crude palm oil obtained is refined by a subsequent refining process. Furthermore, the pressed cake fibers are used for obtaining palm kernel oil by separating palm kernels from the cake fibers.
The crude palm oil obtained has a Deterioration of Bleachability Index (DOBI) of preferably not less than **2.6,** more preferably not less than **2.8** and further more preferably not less than **3.0.** The Deterioration of Bleachability Index (DOBI) is a numerical value that shows a bleaching property of crude palm oil and can be calculated by measuring absorbance of isooctane solution (**0.5** to **1.0%**) and using the following formula.

$$\text{DOBI} = A/B$$

A: Absorbance in **446** nm
B: Absorbance in **269** nm

In addition, the crude palm oil obtained has an acid value of preferably not more than **7.0,** more preferably not more than **6.0,** further more preferably not more than **5.0** and most preferably not more than **3.0.** The acid value is a numerical value that can be a barometer of hydrolysis of oil-and-fat, and is defined as "milligram of potassium hydroxide required for neutralizing free fatty acid contained in **1** gram of oil-and-fat" in "Standard Methods for the Analysis of Fats, Oils and Related Materials", and in accordance with "Standard Methods for the Analysis of Fats, Oils and Related Materials" (Japan Oil Chemists' Society), is calculated from the following formula after a sample to which neutral detergent is added is dissolved and is titrated with **N/10** potassium hydroxide-ethanol standard solution.

$$\text{Acid value} = (\mathbf{5.611} \times A \times F) / B$$

A: Used amount of N/**10** potassium hydroxide-ethanol standard solution (ml)
F: Factor of N/**10** potassium hydroxide-ethanol standard solution
B: Collection amount of sample (g)

(Process for purifying to obtain palm oil)

As a refining method, a chemical refining method is adopted, and for example, the crude palm oil obtained undergoes degumming due to acid, deacidifying due to alkali, water washing for removing surplus alkali and soap after the deacidifying, bleaching due to absorbent such as clay/activated carbon and the like, and deodorizing due to reduced pressure steam distillation, so that refined palm oil is produced. Each treatment can be carried out by a common method that has been carried out conventionally. For bleaching, clay can be used, but it is preferred to use activated clay.
In the embodiment of the present invention, a process in which the crude palm oil obtained by the above-mentioned method undergoes alkaline deacidification to obtain alkaline deacidified palm oil is an essential process, and due to this, a manufacturing method of palm oil excellent in yield and refining effect can be provided.

Alkaline deacidification is performed on crude palm oil to which alkali aqueous solution is added, stirred subsequently, and alkali oil cake is separated, and further water washing is carried out. It is preferable that the alkali aqueous solution is **5** to **30** mass% concentration aqueous solution of sodium hydroxide, potassium hydroxide and the like, and the solution is added so that the amount thereof becomes **90** to **150%** relative to an amount required for neutralizing free fatty acid in palm oil. It is preferable that the solution is in the case of not less than **90%,** since the free fatty acid is sufficiently removed. It is also preferable that the solution is in the case of not more than **150%,** in order to inhibit unnecessary hydrolysis and to enhance the yield. It is preferable that the addition, stirring, and separation are carried out at **60** to **98** degrees C. Once crude palm oil to which alkali aqueous solution is added is stirred subsequently and alkali oil cake is separated, and then if needed, once again crude palm oil to which alkali aqueous solution is added is stirred subsequently and alkali oil cake is separated, so that the free fatty acid can be further reduced. It is preferable that for the second round of alkali aqueous solution, **5** to **30** mass% concentration aqueous solution of sodium hydroxide, potassium hydroxide and the like is added in an amount of not more than **1** mass% relative to the oil. After the separation, it is preferable that water washing is carried out for removing surplus alkali and soap remaining in the oil. In case that the soap content is about several ppm, it can be removed in a subsequent bleaching process. In addition, after the water washing, drying is carried out under reduced pressure, but it can be also carried out in a subsequent bleaching process.

It is preferable that a period from obtaining crude palm oil by the pressing to carrying out alkaline deacidification is within **12** hours in terms of inhibiting hydrolysis of crude palm oil and enhancing chromaticity and flavor of palm oil. It is more preferable that the period is within 6 hours.

Palm oil obtained by alkaline deacidification is suitable for being used for obtaining fractionated palm oil such as palm olein, palm super olein, palm mid-fraction, palm stearin and the like by fractionation. Fractionation can be carried out by a conventionally-known method. In addition, if needed, refining can be further performed before or after fractionation. In the present invention, fractionation can be carried out before bleaching and/or deodorizing, if after alkaline deacidification. In addition, fractionation can be also carried out after bleaching and/or deodorizing are/is carried out, and after that bleaching and/or deodorizing can be further carried out.

(Palm oil)

Palm oil manufactured with the above-mentioned manufacturing method for palm oil is palm oil of superior chromaticity and flavor.

(Deodorized distillates)

Deodorized distillates are substances that are obtained by aggregating fractions distilled by deodorizing in the refining process. The deodorized distillates obtained by deodorizing in the manufacturing method for palm oil according to the embodiment of the present invention have characteristics in that free fatty acids contained are low and useful components are highly concentrated, so as to be suitable for being used as starting materials for obtaining the useful components.

The deodorized distillates include, for example, tocopherols, tocotrienols, squalenes and the like as the useful components, and without further processing or by being further refined, they are used for medical products, food products, cosmetic products and the like for the purpose of an antioxidant agent, a nutrient component and the like.

In the deodorized distillates in the embodiment, a total concentration of tocopherols and tocotrienols is not less than **20000** ppm. In particular, the deodorized distillates are excellent as starting materials for obtaining the components in that a total concentration of tocopherols and tocotrienols of which mass ratio (tocopherols : tocotrienols) is **20 : 80** to **40 : 60** is not less than **20000** ppm, preferably not less than **30000** ppm, and squalenes concentration is not less than **3** mass%, preferably not less than 5 mass% and more preferably not less than **10** mass%.

Consequently, the above-mentioned deodorized distillates are refined, so that tocopherols, tocotrienols and squalenes can be obtained without needing any complex concentration.

(Fractionated palm oil)

Palm olein and palm super olein of fractionated palm oils manufactured with the above-mentioned manufacturing method according to the present invention are, in particular, a fractionated palm oil that is excellent in cold resistance.

[Advantages of embodiment of the present invention]

According to the embodiment of the present invention, coloring and bad odor during storage can be inhibited without increasing an amount of clay, so that palm oil in which superior chromaticity and flavor can be maintained for long periods and a manufacturing method therefor can be provided.

In addition, according to the embodiment of the present invention, a manufacturing method for palm oil with which palm oil can be obtained with good yield even if a chemical refining method of alkaline deacidification is performed, and with which deodorized distillates in which useful components are highly concentrated can be obtained can be provided.

In addition, according to the embodiment of the present invention, deodorized distillates in which useful components are highly concentrated and a manufacturing method therefor can be provided.

In addition, according to the embodiment of the present invention, fractionated palm oil excellent in cold resistance and a manufacturing method therefor can be provided.

Hereinafter, the present invention will be explained by Examples, but the present invention will not be limited by these Examples.

### EXAMPLES

In accordance with the manufacturing process flows of FIG. **1** (Example) and FIG.**2** (Comparative Example), palm oils were manufactured under the conditions described below.

[Manufacturing of palm oil and deodorized distillates of Example **1**]

In Example **1**, in accordance with the flow of FIG.**1**, after steam enzyme deactivation (steaming) was carried out by using palm fruit bunch within **12** hours after harvesting as a starting material, fruit removal for separating into empty bunch and palm fruits due to steaming was carried out, and pressing to separate crude palm oil and palm fibers was carried out. Before the purification, gravity separation and centrifugation were carried out to the pressed palm oil obtained by the pressing so that crude palm oil (A) was obtained. Acid value of crude palm oil (A) obtained was **2.8** (free fatty acid content was **1.23** mass%), and Deterioration of Bleachability Index (DOBI) thereof was **2.8.**

Refining was carried out on the crude palm oil obtained under the conditions described below, so that refined palm oil was manufactured.

> **(1)** Degumming due to acid: **0.1** mass% of **75**% phosphoric acid solution was added to crude palm oil, and stirring was carried out at **90** degrees C, for **10** minutes and at a rotating speed of **450** rpm.
> (2) Deacidification due to alkali: After the degumming, **11.1** mass% concentration aqueous solution of sodium hydroxide (NaOH) was added, in order that the amount thereof became **120**% relative to an amount required for neutralizing free fatty acid, and stirring was carried out at **90** degrees C and for **30** minutes. After that, alkali oil cake was removed by centrifugation. Next, **0.5**% of **11.1** mass% concentration aqueous solution of sodium hydroxide (NaOH) was added, and stirring was carried out at **90** degrees **C** and for **30** minutes. After that, alkali oil cake was removed by centrifugation. Next, water washing was carried out **4** times by equivalent amount of hot water (**90** degrees C). And, drying was carried out at **90** degrees C and under vacuum.
> (3) Bleaching: Activated clay (manufactured by Mizusawa Industrial Chemicals, Ltd.) was added in an amount of **1.5** mass% relative to crude palm oil, and stirring was carried out at **105** degrees C, for **30** minutes, under vacuum and at a rotating speed of **450** rpm. After that, filtration under reduced pressure was carried out.
> (4) Deodorizing: Steam was introduced in an amount of **2** to **4** mass% relative to oil under vacuum, for **60** minutes and at **240** to **270** degrees C, and fractions distilled were collected so as to obtain deodorized distillates. On the other hand, at the cooling stage, a slight amount of citric acid was added to the oil. After that, filtration was carried out so that refined palm oil was obtained.

[Manufacturing of palm oil and deodorized distillates of Comparative Example **1**]

In Comparative Example **1,** in accordance with the flow of FIG.**2**, palm oil and deodorized distillates were manufactured as described below.

After steam enzyme deactivation (steaming) was carried out by using palm fruit bunch beyond **24** hours after harvesting as a starting material, fruit removal for separating into empty bunch and palm fruits due to steaming was carried out, and pressing to separate crude palm oil and palm fibers. Before the purification, gravity separation and centrifugation were carried out to the pressed palm oil obtained by the pressing so that crude palm oil (B) was obtained. In addition, as shown in FIG.**2**, degumming due to acid, bleaching and deodorizing were carried out so that refined palm oil and deodorized distillates were obtained.

With regard to manufacturing conditions, Comparative Example **1** was different from Example **1** in that crude palm oil (B) was used, crude palm oil **(B)** being manufactured by that steam enzyme deactivation (steaming) which was carried out by using palm fruit bunch beyond **24** hours after harvesting of palm as a starting material, and in that deacidification due to alkali was not carried out, while all other manufacturing conditions other than the above-mentioned conditions remained the same. Furthermore, acid value of crude palm oil **(B)** was **8.7** (free fatty acid content was **3.99** mass%), and Deterioration of Bleachability Index (DOBI) thereof was **2.4.**

[Manufacturing of palm oil and deodorized distillates of Comparative Example **2**]

In Comparative Example **2,** crude palm oil that was used in Example **1** was used, and refining (degumming due to acid, bleaching and deodorizing) was carried out similarly to Comparative Example **1** so that refined palm oil and deodorized distillates were obtained. Comparative Example **2** was different from Example **1** described above in that deacidification due to alkali was not carried out, while all other manufacturing conditions other than the above-mentioned condition remained the same.

[Manufacturing of palm oil and deodorized distillates of Comparative Example **3**]

In Comparative Example **3**, in accordance with the flow of FIG.1 (posterior half) and the flow of FIG.2 (anterior half), palm oil and deodorized distillates were manufactured. Namely, in Comparative Example **3,** crude palm oil that was used in Comparative Example **1** was used, and refining (degumming due to acid, deacidification due to alkali, bleaching and deodorizing) was carried out similarly to Example **1** so that refined palm oil and deodorized distillates were obtained. Comparative Example **3** was different from Example **1** described above in that steam enzyme deactivation (steaming) was carried out by using palm fruit bunch beyond **24** hours after harvesting of palm as a starting material, while all other manufacturing conditions other than the above-mentioned condition remained the same.

[Yield and the like of palm oil and deodorized distillates manufactured]

Yield and the like of palm oil and deodorized distillates manufactured in Example **1** and Comparative Examples **1** to **3** are shown in Table **1** and Table **2**. Each value was measured as follows.

(Acid value): Measured in accordance with "Standard Methods for the Analysis of Fats, Oils and Related Materials" (Japan Oil Chemists' Society)
(Chromaticity (Y/R)): Measured by Lovibond chromatometer using a cell of **133.4** mm (Y: yellow, R: red)
(Iodine value): Measured in accordance with "Standard Methods for the Analysis of Fats, Oils and Related Materials" (Japan Oil Chemists' Society)
(Peroxide value): Measured in accordance with "Standard Methods for the Analysis of Fats, Oils and Related Materials" (Japan Oil Chemists' Society)
(Diglyceride content (mass%)): Measured in accordance with gas chromatography method (CDM (hour)): Measured in accordance with "Standard Methods for the Analysis of Fats, Oils and Related Materials (Rancimat)" (Japan Oil Chemists' Society)

[Table **1**]

[Table 1]

| | Crude palm oil (A) | Crude palm oil (B) | Ex.1 Palm oil | Com.1 Palm oil | Com.2 Palm oil | Com.3 Palm oil |
|---|---|---|---|---|---|---|
| Purification yield (%) | - | - | 83.4 | 92.1 | 92.8 | 74.1 |
| Acid value | 2.8 | 8.7 | 0.02 | 0.05 | 0.03 | 0.02 |
| Chromaticity (Y/R) | - | - | 5.0/0.5 | 17/1.7 | 7.4/0.7 | 9.0/0.9 |
| Iodine value | 53.9 | 52.4 | 53.3 | 51.9 | 52.7 | 51.7 |
| Peroxide value | 0.4 | 3.1 | ND | ND | ND | ND |
| Diglyceride content (mass%) | 3.8 | 5.4 | 3.4 | 4.9 | 3.6 | 4.0 |

(continued)

|  | Crude palm oil (A) | Crude palm oil (B) | Ex.1 Palm oil | Com.1 Palm oil | Com.2 Palm oil | Com.3 Palm oil |
|---|---|---|---|---|---|---|
| CDM (hour) | - | - | 13.3 | 13.9 | 13.0 | 12.1 |
| *Ex.1: Example 1<br>*Com.1: Comparative Example 1<br>*Com.2: Comparative Example 2<br>*Com.3: Comparative Example 3 | | | | | | |

[Table 2]

[Table 2]

|  | Ex.1 | Com.1 | Com.2 | Com.3 |
|---|---|---|---|---|
| Yield of deodorized distillates (%) | 0.3 | 4.5 | 2.1 | 0.5 |
| Squalene concentration in deodorized distillates (%) | 11.57 | 0.89 | 2.27 | 7.88 |
| Total concentration of tocopherols and tocotrienols in deodorized distillates (ppm) | 30,260 | 4,980 | 14,100 | 36,700 |
| Tocopherol isomer concentration to tocopherols and tocotrienols in deodorized distillates (%) | a: 27.9<br>B: 0.3<br>Y: 3.1<br>Total: 31.3 | a: 28.2<br>B: -<br>Y, 2.5<br>Total: 30.7 | a: 23.9<br>B: -<br>Y: 3.3<br>Total: 27.2 | a: 29.1<br>B: 0.3<br>Y: 2.8<br>Total: 32.2 |
| Tocotrienol isomer concentration to tocopherols and tocotrienols in deodorized distillates (%) | a: 23.8<br>Y: 28.1<br>$\delta$:16.9<br>Total: 68.8 | a: 26.8<br>Y: 30.8<br>$\delta$:11.7<br>Total: 69.3 | a: 26.3<br>Y:31.5<br>$\delta$:15.1<br>Total: 72.9 | a: 24.0<br>Y:32.6<br>$\delta$:11.2<br>Total: 67.8 |
| *Ex.1: Example 1<br>*Com.1: Comparative Example 1<br>*Com.2: Comparative Example 2<br>*Com.3: Comparative Example 3 | | | | |

As is clear from Table 1, it is found that in Example 1, although refining was performed in accordance with a chemical refining method, palm oil has been obtained with higher yield than Comparative Example 3 using the same chemical refining method, and also with the chromaticity (Y/R), palm oil in which the chromaticity (Y/R) of Example 1 is lower than that of the Comparative Examples.

In addition, as is clear from Table 2, it is found that in Example 1, deodorized distillates have been obtained, in which useful components have been highly concentrated, in particular, the squalene concentration where it is higher in comparison with Comparative Examples 1 and 2.

[Storage test]

150 g of refined palm oil was put into a 500 ml can and covered with a lid. This was stored at temperatures of 5 degrees C and 60 degrees C, in a dark place and for the periods of 2 weeks and 1 month, and then chromaticity and flavor thereafter were evaluated. Chromaticity was measured by Lovibond chromatometer using a cell of 133.4 mm, and was indexed as Y + R (Y: yellow, R: red). Flavor was evaluated as described below. Evaluation results are shown in Table 3 and Table 4.

(Evaluation of flavor)

Samples were conducted in the sensory taste evaluation, and flavor was evaluated on a scale of 4 to 1 described below. Evaluation was carried out by 10 panelists in the company and an average value was calculated.

   4: There is no back odor and flavor is extremely good



**EP 2 351 822 A1**

**3**: There is slight back odor but flavor is good
**2**: There is some back odor but it is testable
**1**: Strong back odor is felt and it is not preferable for edible use

[Table **3**]

[Table 3]

| Storage at 5 degrees C | | Ex.1 | Com.1 | Com.2 | Com.3 |
|---|---|---|---|---|---|
| Chromaticity | 2 weeks | 6.1/0.6 | 15/1.5 | 8.8/0.8 | 10/1.0 |
| | 1 month | 5.8/0.5 | 15/1.5 | 8.1/0.8 | 8.1/0.8 |
| Flavor | 2 weeks | 3.2 | 2.4 | 2.5 | 3.0 |
| | 1 month | 3.0 | 2.0 | 2.3 | 2.8 |
| *Ex.1: Example 1 *Com.1: Comparative Example 1 *Com.2: Comparative Example 2 *Com.3: Comparative Example 3 *Chromaticity: Chromaticity (Y/R) | | | | | |

[Table **4**]

[Table 4]

| Storage at 60 degrees C | | Ex.1 | Com.1 | Com.2 | Com.3 |
|---|---|---|---|---|---|
| Chromaticity | 2 weeks | 8.8/0.8 | 25/2.5 | 11/1.1 | 12/1.2 |
| | 1 month | 6.6/0.6 | 25/2.5 | 11/1.1 | 11/1.1 |
| Flavor | 2 weeks | 3.0 | 2.6 | 2.7 | 2.7 |
| | 1 month | 2.1 | 1.5 | 1.7 | 1.8 |
| *Ex.1: Example 1 *Com.1: Comparative Example 1 *Com.2: Comparative Example 2 *Com.3: Comparative Example 3 *Chromaticity: Chromaticity (Y/R) | | | | | |

From Table **3** and Table **4,** it can be found that in Example **1**, refined palm oil having low chromaticity (Y/R) and good flavor has been obtained even after storage.

[Manufacturing of refined palm oil Examples **2** to **3**]

Next, refined palm oils were manufactured under the conditions described below.

(Manufacturing of crude palm oil used for Example **2**)

After steam enzyme deactivation (steaming) was carried out by using palm fruit bunch within **12** hours after harvesting as a starting material, fruit removal for separating into empty bunch and palm fruits due to steaming was carried out, and pressing to separate palm oil and palm fibers. Before the purification and fractionation, gravity separation and centrifugation were carried out to the pressed palm oil obtained by the pressing so that crude palm oil (**C**) was obtained.

(Manufacturing of crude palm oil used for Example **3**)

In addition, by using another palm fruit bunch within **12** hours after harvesting, the same processing as the above-mentioned processing was carried out so that crude palm oil (D) was obtained.

(Refining and fractionation in Examples **2** to **3**)

Refining ((**1**), (**2**), (**4**) and (**5**)) and fractionation (**3**) were carried out on the crude palm oils (C), (D) under the conditions described below, so that refined palm oils were manufactured.

**(1)** Degumming due to acid: **0.1** mass% **of 75**% phosphoric acid solution was added to crude palm oil, and stirring was carried out at **90** degrees **C**, for **10** minutes and at a rotating speed of **450** rpm.

(2) Deacidification due to alkali: After the degumming, **11.1** mass% concentration aqueous solution of sodium hydroxide (NaOH) was added, in order that the amount thereof became **120%** relative to an amount required for neutralizing free fatty acid, and stirring was carried out at 90 degrees C and for **30** minutes. After that, alkali oil cake was removed by centrifugation. Next, **0.5%** of **11.1** mass% concentration aqueous solution of sodium hydroxide (NaOH) was added, and stirring was carried out at **90** degrees **C** and for **30** minutes. After that, alkali oil cake was removed by centrifugation. Next, water washing was carried out four times by equivalent amount of hot water **(90 degrees C).** And, drying was carried out at **90** degrees **C** and under vacuum.

**(3)** Fractionation (solvent fractionation): After **600** g of oil-and-fat that were subjected to deacidification due to alkali and 3 kg of acetone were put into a round-bottomed flask and stirred, the temperature of stirred mixture was controlled to **45** degrees **C,** and this was cooled in a constant temperature water tank controlled to **2** degrees **C** for about 1 hours. After the cooling, pressure filtration due to nitrogen ($N_2$) was carried out (filtration pressure: **0.1** Mpa, filtration time: blowing was carried out for **30** minutes). After the filtration, cake washing was carried out by using **4** ml/g of cold acetone relative to a feeding amount of the oil-and-fat in three batches. After that, removal of solvent was carried out by using an evaporator and a vacuum pump.

**(4)** Bleaching: Activated clay (manufactured by Mizusawa Industrial Chemicals, Ltd.) was added in an amount of **1.5** mass% relative to fractionated palm oil, and stirring was carried out at **105** degrees C, for **30** minutes, under vacuum and at a rotating speed of **450** rpm. After that, filtration under reduced pressure was carried out.

**(5)** Deodorizing: Steam was introduced in an amount of **2** to **4** mass% relative to oil under vacuum, for **60** minutes and at **240** to **270** degrees C, and fractions distilled were collected so as to obtain deodorized distillates. On the other hand, at the cooling stage, a slight amount of citric acid was added to the oil. After that, filtration was carried out so that refined fractionated palm oil was obtained.

[Manufacturing of fractionated palm oils of Comparative Examples **4** to **5**]

Comparative Example **4** was different from Examples **2** to **3** described above in that steam enzyme deactivation (steaming) was carried out by using palm fruit bunch beyond **24** hours after harvesting as a starting material, while all other manufacturing conditions other than the above-mentioned condition remained the same, Comparative Example **4** was carried out under the same conditions as Examples **2** to **3,** so that refined fractionated palm oil was manufactured.

Comparative Example **5** was different from Examples **2** to **3** described above in that steam enzyme deactivation (steaming) was carried out by using palm whole fruits beyond **24** hours after harvesting as a starting material, and in that deacidification due to alkali was not carried out, while all other manufacturing conditions other than the above-mentioned conditions remained the same, Comparative Example **5** was carried out under the same conditions as Examples **2** to **3,** so that refined fractionated palm oil was manufactured.

[Acid value etc. of crude palm oil]

Acid value etc. of crude palm oil obtained by Examples **2** to **3** and Comparative Examples **4** to **5** are shown in Table **5.** Each value was obtained by the above-mentioned method.

[Table 5]

[Table 5]

|  | Ex.2 Crude palm oil (C) | Ex.3 Crude palm oil (D) | Com.4 Crude palm oil (E) | Com.5 Crude palm oil (F) |
|---|---|---|---|---|
| Acid value | 3.3 | 4.5 | 6.4 | 7.3 |
| Deterioration of Bleachability Index (DOBI) | 2.94 | 2.70 | 2.55 | 2.33 |
| Iodine value | 55.1 | 52.2 | 53.0 | 52.3 |

(continued)

| | Ex.2 Crude palm oil (C) | Ex.3 Crude palm oil (D) | Com.4 Crude palm oil (E) | Com.5 Crude palm oil (F) |
|---|---|---|---|---|
| Free fatty acid content (mass%) | 1.50 | 1.78 | 2.80 | 3.43 |
| Diglyceride content (mass%) | 4.1 | 4.1 | 4.3 | 4.7 |
| *Ex.2: Example 2<br>*Ex.3: Example 3<br>*Com.4: Comparative Example 4<br>*Com.5: Comparative Example 5 | | | | |

[Yield etc. of fractionated palm oil manufactured]

Data etc. of refined fractionated palm oil manufactured by Examples **2** to **3** and Comparative Examples **4** to **5** are shown in Table **6.** Further, the fractionation yield is a yield in a fractionation process. Each value other than the above-mentioned yield was obtained as follows.

(Iodine value): Standard Methods for the Analysis of Fats, Oils and Related Materials (Diglyceride content (mass%)): Gas chromatography method

(Clouding point (degrees C)): Standard Methods for the Analysis of Fats, Oils and Related Materials

[Table **6**]

[Table 6]

| | Ex.2 Fractionated palm oil | | Ex.3 Fractionated palm oil | | Com.4 Fractionated palm oil | | Com.5 Fractionated palm oil | |
|---|---|---|---|---|---|---|---|---|
| | POL | PST | POL | PST | POL | PST | POL | PST |
| Fractionation yield (%) | 58.5 | 41.5 | 55.2 | 44.8 | 59.4 | 40.6 | 58.1 | 41.9 |
| Iodine value | 68.3 | 36.5 | 68.3 | 32.0 | 67.9 | 30.2 | 67.3 | 31.5 |
| Diglyceride content (mass%) | 6.3 | 1.2 | 6.4 | 1.0 | 6.6 | 0.8 | 7.3 | 1.1 |
| Clouting point (degrees C) | 3.8 | Not carried out | 4.2 | Not carried out | 5.0 | Not carried out | Not carried out | Not carried out |
| *Ex.2: Example 2<br>*Ex.3: Example 3<br>*Com.4: Comparative Example 4<br>*Com.5: Comparative Example 5<br>*POL: Palm olein<br>*PST: Palm stearin | | | | | | | | |

As is clear from Table **6,** it can be found that Examples **2** to **3** has a lower clouding point than Comparative Example **4,** so that palm olein (fractionated palm oil) excellent in cold resistance has been obtained.

**Claims**

**1.**    A manufacturing method for palm oil comprising:

a process wherein a palm starting material is steamed within **24** hours of harvesting and then pressed to obtain crude palm oil; and

a subsequent refining process wherein the crude palm oil undergoes alkaline deacidification to obtain deacidified palm oil.

2. The manufacturing method for palm oil described in claim **1,** wherein the palm starting material is steamed within **12** hours of harvesting to obtain the crude palm oil.

3. The manufacturing method for palm oil described in claim **1** or **2,** wherein the crude palm oil undergoes alkaline deacidification within **12** hours of obtaining the crude palm oil by pressing.

4. The manufacturing method for palm oil described in any one of claims **1** to **3,** wherein the crude palm oil has a Deterioration of Bleachability Index (DOBI) of not less than 2.6.

5. The manufacturing method for palm oil described in any one of claims **1** to **4,** wherein the crude palm oil has an acid value of not more than **7.0.**

6. The manufacturing method for palm oil described in any one of claims **1** to **5,** wherein during the refining process, the deacidified palm oil undergoes bleaching and then undergoes deodorization.

7. Palm oil manufactured with the manufacturing method for palm oil described in any one of claims **1** to **6.**

8. A manufacturing method for deodorized distillates obtaining the deodorized distillates by the deodorization in the manufacturing method for palm oil described in claim **6.**

9. Deodorized distillates obtained by the deodorization in the manufacturing method for palm oil described in claim **6.**

10. The deodorized distillates described in claim **9,** wherein a total concentration of tocopherols and tocotrienols in the deodorized distillates is not less than **20000** ppm.

11. The deodorized distillates described in claim **9** or **10,** wherein a concentration of squalenes in the deodorized distillates is not less than **3** mass%.

12. A manufacturing method for tocopherols through obtaining the tocopherols by purifying the deodorized distillates described in any one of claims **9** to **11.**

13. A manufacturing method for tocotrienols through obtaining the tocotrienols by purifying the deodorized distillates described in any one of claims **9** to **11.**

14. A manufacturing method for squalenes through obtaining the squalenes by purifying the deodorized distillates described in any one of claims **9** to **11.**

15. A fractionated palm oil obtained by fractionating the palm oil manufactured with the manufacturing method for palm oil described in any one of claims **1** to **6**.

16. The fractionated palm oil described in claim **15**, wherein the fractionated palm oil is palm olein or palm super olein.

# FIG. 1

# FIG. 2

Palm fruit bunch

→ Steaming
→ Fruit removal

Empty bunch

Palm fruits

→ Pressing

Pressed cake fibers

Pressed oil

→ Gravity separation/centrifugation

Crude palm oil

→ Degumming
→ Bleaching
→ Deodorization

Deodorized distillates

Refined palm oil

→ Fractionation

Fractionated refined palm oil

| **INTERNATIONAL SEARCH REPORT** | International application No. |
|---|---|
| | PCT/JP2009/068363 |

A.   CLASSIFICATION OF SUBJECT MATTER
*C11B3/06*(2006.01)i, *A23D9/02*(2006.01)i, *C11B1/06*(2006.01)i, *C11B1/16*
(2006.01)i, *C11B7/00*(2006.01)i, *C11B11/00*(2006.01)i

According to International Patent Classification (IPC) or to both national classification and IPC

B.   FIELDS SEARCHED

Minimum documentation searched (classification system followed by classification symbols)
C11B3/06, A23D9/02, C11B1/06, C11B1/16, C11B7/00, C11B11/00

Documentation searched other than minimum documentation to the extent that such documents are included in the fields searched
Jitsuyo Shinan Koho          1922–1996   Jitsuyo Shinan Toroku Koho    1996–2010
Kokai Jitsuyo Shinan Koho    1971–2010   Toroku Jitsuyo Shinan Koho    1994–2010

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X<br>Y | Yushi・Yuryo Handbook, Kabushiki Kaisha Saiwai Shobo, 25 May 1988 (25.05.1988), pages 20, 256 to 262 | 1-11,15,16<br>12-14 |
| X<br>Y | JP 2006-28466 A (Tsukishima Foods Industry Co., Ltd.),<br>02 February 2006 (02.02.2006),<br>claims; paragraphs [0005], [0006]; examples<br>(Family: none) | 1-11,15,16<br>12-14 |
| Y<br>A | JP 2-9875 A (Japan Bioindustry Association),<br>12 January 1990 (12.01.1990),<br>claims; page 2, lower right column, lines 13 to 16; examples<br>& US 5190618 A          & EP 333472 A2 | 12,13<br>1-11,14-16 |

☒   Further documents are listed in the continuation of Box C.          ☐   See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 January, 2010 (14.01.10) | 26 January, 2010 (26.01.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**EP 2 351 822 A1**

**INTERNATIONAL SEARCH REPORT**

| International application No. |
|---|
| PCT/JP2009/068363 |

C (Continuation).    DOCUMENTS CONSIDERED TO BE RELEVANT

| Category* | Citation of document, with indication, where appropriate, of the relevant passages | Relevant to claim No. |
|---|---|---|
| Y<br>A | JP 62-209029 A  (Hispano Quimica S.A.),<br>14 September 1987 (14.09.1987),<br>claims; examples<br>& US 4754090 A          & EP 228980 A1 | 14<br>1-13,15,16 |

Form PCT/ISA/210 (continuation of second sheet) (April 2007)

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006A316254 A

- JP 1990H02A9875 A

**Non-patent literature cited in the description**

- Bailey's Industrial Oil and Fat Products. A Wiley-Interscience Publication JOHN WILEY & SONS, INC, 1996, vol. 2, 288-331